# EUROPEAN PATENT APPLICATION

(11) **EP 4 818 283 A1**
(43) Date of publication of application: **07.10.2026**
(21) Application number: 25167630.0
(22) Date of filing: 01.04.2025
(51) Int. Cl.: C09J 7/29

(54) **ADHESIVE TAPE, IN PARTICULAR MAKE-READY TAPE FOR COMPENSATING TOLERANCES IN DIE-CUTTING PROCESSES AND/OR DIE-CUTTING TOOLS, ADHESIVE TAPE SET, AND METHOD FOR MANUFACTURING AN ADHESIVE TAPE**

(71) Applicant: Cito System GmbH, 90571 Schwaig bei Nürnberg (DE)
(72) Inventor: Zeybek, Ihsan, 92348 Berg (DE)
(74) Representative: Wagner, Sigrid

(57) **Abstract**

The invention refers to an adhesive tape (1), in particular to a make-ready tape for compensating tolerances in die-cutting processes and/or die-cutting tools, comprising:
- a first layer forming a strip-shaped, planar carrier layer (4) having a first side and a second side opposite the first side,
- a second layer (2) which is joined to the first side of the carrier layer (4) by means of a bonding layer (3),
- a third layer forming a pressure-sensitive adhesive layer (6) which is joined to the second side of the carrier layer,
wherein, for identifying the thickness of the adhesive tape (1) by means of a defined color, at least one of the following measures is provided:
a) a color layer (5, 7) having the defined color is arranged between the carrier layer (4) and the bonding layer (3) and/or between the carrier layer (4) and the pressure-sensitive adhesive layer (6),
b) the second layer (2) has the defined color,
c) the bonding layer (3) has the defined color.

## Description

The present invention relates to an adhesive tape, in particular to a make-ready tape for compensating tolerances in die-cutting processes and/or die-cutting tools, to a set of adhesive tapes, and to a method for manufacturing an adhesive tape.

In the field of die-cutting technology, so-called make-ready tapes (also referred to as patching tapes) are used to compensate for height tolerances between individual segments of the cutting die or between the die and the substrate. These tapes are typically available in multiple thickness variants, and each thickness must be reliably and quickly identifiable by the user during the make-ready process. For this reason, color-coded identification systems are commonly employed, in which each tape thickness is associated with a specific color.

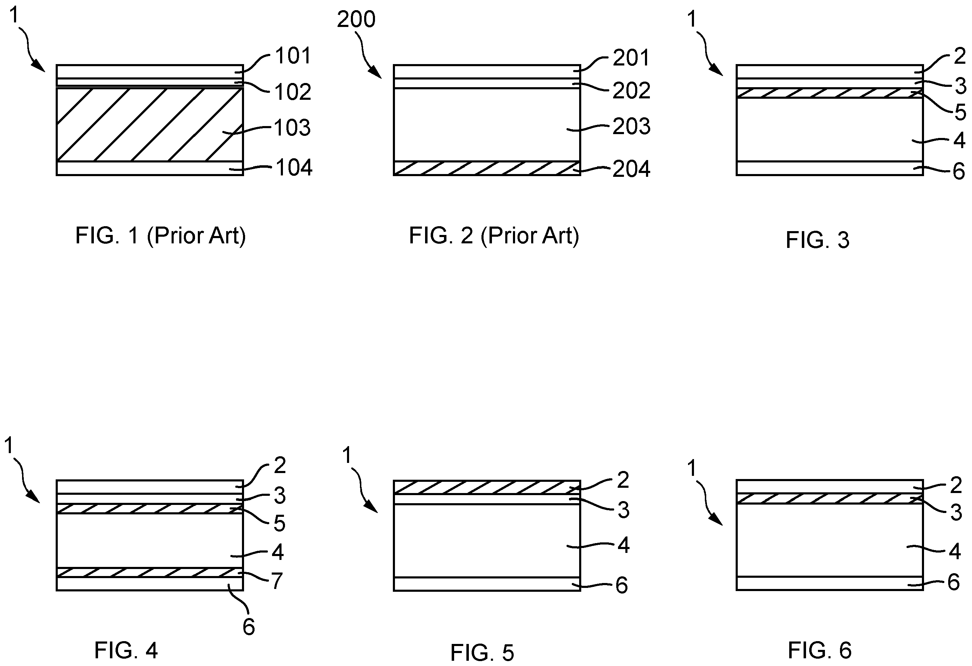

In existing solutions, such as the current generation of make-ready tapes developed by the applicant, color coding is achieved by using through-dyed glassine paper as the carrier layer (see Figure 1). Figure 1 shows the structure of such a make-ready tape 100 in cross-section, comprising a BOPP film 101 as a cover layer, which is joined to a first side of a through-dyed carrier layer 103 by means of a laminating adhesive (laminating glue) 102 serving as a bonding layer. The second side of the carrier layer 103 is provided with a pressure-sensitive adhesive layer 104. Each tape thickness is produced using a separately dyed paper variant-typically blue, red, yellow or white-to indicate a specific thickness. While this approach allows for immediate visual identification, it presents several drawbacks. Firstly, it requires a broad portfolio of colored base materials, each of which must be sourced, stocked, and processed separately. This increases the complexity of the supply chain, drives up material procurement costs, and complicates quality control due to batch-to-batch variation in dye uptake and fiber composition. Moreover, through-dyeing often results in inconsistent color appearance, especially at the edges of the tape or when using semi-transparent cover layers.

In parallel, alternative solutions are known in which the color coding is implemented via the adhesive layer. In particular, one known make-ready tape 200 (see Figure 2) uses a colored pressure-sensitive adhesive layer 204, applied to a non-dyed carrier layer 203 in the form of a glassine paper. This make-ready tape 200 also comprises a BOPP film 201 as a cover layer, which is joined to a first side of the carrier layer 203 by means of a laminating adhesive (laminating glue) 202 serving as a bonding layer. In this approach, each tape variant is produced with a different adhesive color, which is visible from the underside of the tape. While this method reduces the need for multiple paper types, it introduces other limitations. The coloring of pressure-sensitive adhesives is technically challenging and often leads to processing instability, variations in adhesive performance, and visual inconsistencies due to the interaction between pigments, additives, and the adhesive matrix. Moreover, the range of achievable colors is limited by the optical properties and thickness of the adhesive, and colored adhesives may be prone to bleeding, migration, or contamination of processing equipment. These factors affect both product quality and manufacturing efficiency.

It is therefore an object of the present invention to provide an adhesive tape, in particular a make-ready tape for compensating tolerances in die-cutting processes and/or die-cutting tools, that enables reliable thickness identification through color coding while improving production flexibility and reducing material diversity. A further object of the invention is to provide a set of such adhesive tapes of different thicknesses and to provide a method for manufacturing such an adhesive tape.

This object is achieved by the features of the independent claims. Advantageous embodiments are claimed in the dependent claims.

The invention refers to an adhesive tape, in particular a make-ready tape for compensating tolerances in die-cutting processes and/or die-cutting tools, comprising
- a first layer forming a strip-shaped, planar carrier layer having a first side and a second side opposite the first side,
- a second layer which is joined to the first side of the carrier layer by means of a bonding layer,
- a third layer forming a pressure-sensitive adhesive layer which is joined to the second side of the carrier layer,
wherein, for identifying the thickness of the adhesive tape by means of a defined color, at least one of the following measures a) to c) is provided:
a) a color layer having the defined color is arranged between the carrier layer and the bonding layer and/or between the carrier layer and the pressure-sensitive adhesive layer,
b) the second layer has the defined color,
c) the bonding layer has the defined color.

A particular advantage of the present invention lies in the use of a carrier layer which, in contrast to prior art solutions, does not require full-depth coloration (through-dyeing) to achieve visual thickness identification. In conventional adhesive tapes of the make-ready type, the carrier paper is provided in different pre-dyed color variants, with each color indicating a different tape thickness. This requires the provision and management of multiple types of base material, which increases production complexity and inventory costs. Moreover, through-dyeing limits the achievable color precision, since color appearance may vary due to batch-to-batch differences in paper fibers and absorption characteristics.

In contrast, the present invention allows the use of a simple and uniform, especially untreated, carrier layer, such as calendered paper.

In addition to the advantages already mentioned, the invention provides further benefits resulting from a flexible color coding:
The defined color can be freely selected and changed independently of the supplier of the carrier layer, allowing full flexibility in color scheme design and enabling customer-specific marking systems. Furthermore, the color can be applied to one or both sides of the carrier layer, allowing visibility from different viewing angles, even through transparent or semi-transparent overlying layers. Furthermore, the amount of coloring material required is significantly reduced compared to full-depth coloration, resulting in cost and resource savings. Furthermore, separate and especially printed color layers offer high contrast and consistent appearance, improving visual recognition and reducing the risk of incorrect application. And furthermore, neutral (unprinted) adhesive tapes may be produced in advance and printed later in an inline or offline process, enabling modular production.

The term "pressure-sensitive adhesive" as used in the present application refers to any suitable self-adhesive material which adheres to a substrate upon the application of light pressure, without requiring activation by heat, moisture, solvent or radiation. However, the possibility that such additional activation may optionally be used and is not excluded. Such adhesives are typically permanently tacky at room temperature and allow for easy application without additional processing steps.

In typical use, the adhesive tape is provided as rolled goods, and the color coding is primarily intended to be visually recognized from the side of the roll, i.e., from the roll edge. The defined color of the relevant layer(s) is therefore preferably visible at the cut edge of the tape, which allows for easy identification of the tape thickness during selection and handling. This applies in particular to make-ready tapes commonly used in die-cutting operations, where rapid visual thickness identification is essential for efficient setup. The present invention is particularly well suited to this purpose, since the color is either printed onto the carrier layer or integrated into one of the functional layers (i.e. the bonding layer or the second layer), such that it is reliably visible in the cross-sectional view of the tape. The use of defined colors in or on flat layers with a clear position in the laminate structure ensures that the color coding is consistently visible at the roll edge, regardless of the tape's orientation during application or use.

In a preferred embodiment of variant (a), the color layer extends over the full surface area between the carrier layer and the bonding layer and/or between the carrier layer and the pressure-sensitive adhesive layer. This ensures maximum visibility of the color coding and uniform appearance across the tape width. However, the invention is not limited to this embodiment. The color layer(s) may also be applied only partially, for example in the form of stripes, zones or patterns, as long as it provides a visually distinguishable thickness indication.

Similarly, for variants (b) and (c), both partial and full coloring are equally suitable, depending on the intended application, the desired optical effect, and the manufacturing process. For example, the second layer or bonding layer may be uniformly colored or only in specific zones, such as edges, functional regions, or as a pre-structured co-extrusion component.

In the context of the invention, the individual variants (a), (b), and (c) may be implemented independently of one another or in any combination. For example, the adhesive tape may include both a color layer arranged between the carrier and another functional layer (variant a), and additionally use a pre-colored second layer or bonding layer (variants b and/or c). Such combinations may be used to enhance color visibility through different layers, to create redundancies for quality control, or to implement multi-stage identification systems (e.g., visual from both sides or for cut edges).

Among these alternatives, variant (a) provides additional advantages, particularly in terms of process simplicity, material selection, and production flexibility. The ability to use a single, uncolored carrier material and apply a color layer directly onto the surface allows for a more cost-effective, modular, and flexible production process. Unlike variant (b), which may require pre-colored films or bonding adhesives, or variant (c), which involves potentially more complex adhesive modifications, variant (a) simplifies material procurement, reduces production steps, and increases adaptability to different color schemes. In contrast, variants (b) and (c), although technically feasible and compatible with the general tape structure, require the use of pre-colored functional layers - either in the form of dyed films or pigmented bonding adhesives - which limits production flexibility and modularity. Since the color coding must be implemented at an early stage of the manufacturing process, late-stage customization or customer-specific color adaptation is not easily achievable. Furthermore, variant (a) is easier to integrate into existing production lines, as it does not require additional coating or extruding steps, making it a faster and more versatile solution for color-coding and identification purposes.

In summary, the invention provides several technical approaches for implementing color-coded thickness identification in adhesive tapes, each with specific structural features and application-related advantages. These include the integration of a separate color layer (variant a), the use of a pre-colored second layer (variant b), and the coloration of the bonding layer itself (variant c).

Among these alternatives, variant (a), in which a separate color layer is provided, is considered the particularly preferred solution. This configuration allows the use of a uniform carrier material and decouples the color assignment from the material properties of the cover or bonding layers. Variant (a) enables a modular production concept, facilitates just-in-time customization, and reduces the number of input materials required. Accordingly, variant (a) is regarded as the most flexible and cost-effective implementation for industrial make-ready applications, whereas variants (b) and (c) may be used in specific cases but are not considered equally advantageous in terms of process integration and supply chain management. Therefore, the use of variant (a), without the inclusion of variants (b) and (c), is most preferred. Or in other words, an adhesive tape wherein only measure a) is implemented is the most preferred embodiment.

Variant (a) covers three possible configurations for the color layer: (i) only one color layer between the carrier and bonding layer; (ii) only one color layer between the carrier and the adhesive layer; or (iii) one color layer between the carrier and bonding layer and one color layer between the carrier and the adhesive layer. Among these three possible configurations, the embodiments (i) and (iii) are preferred, as they always feature a color layer between the carrier and bonding layer. This configuration is particularly advantageous because it provides optimal visibility of the color layer, which is essential for reliable thickness identification. Where color layers are applied to both sides of the carrier layer, they may have identical or different thicknesses, depending on the desired optical effect, the selected printing method, or the physical properties of the materials involved. This enables flexible adaptation to a wide range of applications and allows for targeted optimization in terms of color visibility, material efficiency, and process reliability. Variant (i) and (iii) further enable a modular design, offering flexibility in color selection without compromising the mechanical properties of the tape. Among the preferred configurations (i) and (iii), configuration (i) is particularly preferred, as it requires only a single color layer and is therefore structurally simpler and more cost-effective to produce, while still offering the same advantages in terms of visibility, protection, and modular design. Accordingly, a particularly preferred embodiment provides that at least one color layer is arranged between the carrier layer and the bonding layer, the presence of an additional color layer between the carrier layer and the pressure-sensitive adhesive layer being optional. That means regardless of whether an additional color layer is present between the carrier layer and the pressure-sensitive adhesive layer, or whether variants b) and/or c) are used.

According to another preferred embodiment, the color layer is applied to the first side of the carrier layer and/or to the second side of the carrier layer. Applying the color layer to the carrier layer - rather than to the bonding or adhesive layers - offers significant technical advantages in terms of production reliability and process efficiency. The carrier layer provides a stable, flat and dry surface, which allows the color layer to be applied using conventional printing technologies with high precision and reproducibility. In contrast, applying a color layer to an adhesive surface or to a bonding agent may interfere with adhesion performance, require special processing conditions, or increase the risk of contamination. Therefore, the configuration according to this embodiment enables a more robust and cost-effective manufacturing process while ensuring a consistent color appearance for tape identification.

Preferably the color layer is a printed layer applied on one or both sides of the carrier layer using a printing ink in the defined color. This allows for high-precision color application and easy integration into inline or offline production processes. The printing ink used for the color layer may be, for example, a UV-curable ink, a solvent-based ink, or a water-based ink, depending on the substrate properties. The printing may be performed, for instance, using flexographic, digital, or screen printing techniques, preferably flexographic printing.

According to another preferred embodiment, the carrier layer is not colored, in particular not dyed, and/or comprises or is a paper-based material. A particular advantage of the present invention lies in the use of a carrier layer, especially of a paper-based carrier layer, which does not require full-depth coloration (through-dyeing) to achieve visual thickness identification. The invention thus allows the flexible use of any form of suitable uniform carrier material, preferably a bleached material, which may exhibit a white, opaque, translucent or even transparent appearance, depending on its composition and processing. The term "paper material" as used herein preferably refers to a material based on cellulose fibers, typically produced by sheet formation and optionally subjected to further processing steps, such as calendering or surface treatment.

In a particularly preferred embodiment, the carrier layer is a calendered paper. Calendered paper has typically been smoothed and densified by passing it through rollers under pressure and optionally heat, to achieve a closed surface structure and, in some cases, translucency. Preferred examples of calendered paper materials for use in the present invention include parchment paper (Pergamin) and glassine paper. These calendered papers are characterized by high dimensional stability, ensuring consistent tape thickness across the entire roll and improving cut accuracy, by a smooth, closed surface structure, which enables the precise and consistent application of for example printing inks, by sufficient translucency (in particular in the case of glassine), allowing printed color layers to be visible through a transparent or semi-transparent second layer, adequate mechanical strength despite minimal thickness, contributing to a compact tape structure without compromising handling or durability, and low absorbency combined with high surface energy, providing good ink adhesion while minimizing bleeding, smearing, or feathering.

By using a single, uncolored base material for all thickness variants and applying a defined color by means of especially printing - on one or both sides of the carrier paper - the invention enables a highly flexible and modular production system. A single roll type of carrier material may be printed in-line or off-line with the desired color code, reducing material variation and streamlining quality control.

According to a particularly preferred embodiment, the carrier layer has a thickness in the range of 10 to 200 micrometers, preferably in the range of 15 to 170 micrometers, and/or the color layer has a dry thickness in the range of 1 to 25 micrometers, preferably in the range of 1 to 10 micrometers. The preferred thickness of the carrier layer provides a stable and planar base for a multilayer construction and for accurate printing. The dry thickness of the color layer preferably also depends on the selected printing method and the ink formulation. Furthermore, the preferred ranges for the color layer ensure sufficient visual contrast for reliable thickness identification while minimizing any impact on the overall tape thickness and on the mechanical properties of the adhesive tape.

According to another preferred embodiment, the bonding layer is or comprises a laminating adhesive (laminating glue). The laminating adhesive (laminating glue) ensures reliable bonding between the carrier layer and the second layer without impairing the visibility of an underlying color layer. This laminated structure improves handling, die-cutting precision, and durability under process conditions, and allows for the use of thinner and lighter base materials without compromising mechanical integrity or visual identification reliability.

The second layer typically forms the outermost layer of the adhesive tape on the side opposite the pressure-sensitive adhesive layer. It may therefore also be referred to as a "cover layer" or "outer layer". However, the invention is not limited to such a configuration, and additional functional or protective layers may be present above the second layer if required by specific applications.

According to another preferred embodiment, the second layer is formed by a film, preferably a biaxially oriented polypropylene (BOPP) film. A particular advantage of using a film-based second layer lies in its excellent dimensional stability, tear resistance, and surface uniformity. When formed from a biaxially oriented polypropylene (BOPP) film, the second layer additionally provides high transparency, mechanical strength at minimal thickness, and efficient processability. These properties make BOPP films particularly suitable for use in laminated multi-layer adhesive tapes with color-coded thickness indication, as they ensure consistent visual appearance and mechanical robustness without significantly increasing the overall tape profile.

According to another preferred embodiment, the bonding layer and/or second layer is transparent or translucent. This configuration ensures that a color layer printed onto the carrier layer remains visible through the laminated structure. The transparency or translucency of the bonding and/or second layer facilitates reliable thickness identification based on color coding, without impairing the visual effect or mechanical performance of the tape.

Preferred thickness ranges for the bonding layer and the second layer contribute to an optimal balance between mechanical performance, process reliability, and tape flexibility. A bonding layer having a dry thickness in the range of 1 to 20 micrometers, preferably 1 to 12 micrometers, ensures reliable lamination of the second layer to the carrier layer without introducing excessive material buildup or negatively affecting the tape profile. Thin bonding layers are particularly advantageous for maintaining dimensional accuracy, especially in die-cutting applications.

The second layer preferably has a thickness in the range of 1 to 20 micrometers, more preferably in the range of 1 to 10 micrometers. This range provides sufficient tear resistance and mechanical support for the laminated structure, while preserving tape flexibility and minimizing the overall thickness. A thin, transparent second layer also enables the color layer to remain clearly visible, thereby supporting reliable color-coded thickness identification.

According to another preferred embodiment, the bonding layer and/or the second layer is at least partly colored, preferably throughout its volume, most preferably by means of a through-dyeing process. This embodiment represents a further development of variants (b) and (c) of claim 1, in which either the second layer or the bonding layer has the defined color. By integrating the coloration directly into the respective functional layer - rather than providing a separate color layer as in variant (a) - this approach enables color-coded thickness identification without requiring an additional color layer, which may simplify the tape structure and reduce the number of production steps. In certain applications, this integration leads to a more compact and homogeneous layer construction, while maintaining a consistent visual appearance and improving process robustness. The coloration is preferably introduced by way of bulk pigmentation or through-dyeing of the relevant material during manufacture.

According to another preferred embodiment, the adhesive layer is not colored, in particular not dyed. In contrast to certain prior art systems, the pressure-sensitive adhesive layer in the present invention is preferably free of coloring agents, in order to avoid batch-to-batch color variations and improve visual consistency across different tape variants.

In a particularly preferred embodiment, the pressure-sensitive adhesive layer is based on an acrylic polymer system. Acrylic pressure-sensitive adhesives (PSAs) are especially suitable for make-ready tapes used in die-cutting processes, as they provide an excellent balance between adhesion performance, dimensional stability, aging resistance, and compatibility, especially with paper-based carrier layers. In particular, acrylic PSAs exhibit low cold flow and high cohesive strength, which ensures that the adhesive layer maintains its shape and function under static and dynamic load during the die-cutting process. Moreover, acrylic PSAs offer excellent optical clarity, enabling the underlying color layer to remain visible through the adhesive in configurations where translucency or transparency is desired.

The dry thickness of the pressure-sensitive adhesive layer is typically in the range of 5 to 50 micrometers, preferably 8 to 40 micrometers, depending on the properties of the carrier layer, the roughness of the target substrate, and the intended application method. These thickness ranges ensure sufficient conformability, reliable adhesion performance, and easy manual or automated application, without significantly increasing the overall tape profile.

The adhesive layer can be applied to the carrier layer by any suitable coating process. The coating process is preferably carried out in-line with the lamination or printing steps, to enable an efficient and modular production process.

The adhesive tapes described herein, in particular make-ready tapes for use in die-cutting processes, are typically provided in the form of continuous rolls. The width of such tapes generally ranges from 2 mm to 800 mm, preferably from 3 mm to 700 mm, depending on the specific die-cutting system and user preference. The overall length of the tape roll may vary between 5 m and 70 m, preferably between 5 m and 50 m. These dimensions offer a practical balance between sufficient supply per roll and easy handling during manual or automated application.

A particular advantage of the present invention is that it enables the cost-effective and flexible production of adhesive tape sets comprising multiple tape variants of different thicknesses. Since the thickness is indicated by means of a defined color and the color coding is no longer bound to the use of through-dyed carrier materials or pre-colored adhesive or second layers, all tape variants can be based on a uniform base material and customized via modular printing or material selection. This facilitates the production, packaging, and commercial offering of standardized or customer-specific tape sets in which each thickness is clearly associated with a defined color. The invention therefore supports the development of practical, ready-to-use product configurations suitable for industrial make-ready applications. Consequently, the invention further claims a set of adhesive tapes, in particular a make-ready tape set, comprising a plurality of adhesive tapes according to any one of the embodiments described and explained above, wherein the adhesive tapes comprise at least two different thicknesses, and each defined color is associated with a specific tape thickness, and different colors indicate different tape thicknesses.

The invention further claims a method for manufacturing an adhesive tape, in particular an adhesive tape according to any one of the preceding claims, the method comprising the steps of:
- providing a first layer forming a strip-shaped, planar carrier layer having a first side and a second side opposite the first side,
- applying a second layer to the first side of the carrier layer by means of a bonding layer,
- applying a third layer forming a pressure-sensitive adhesive layer to the second side of the carrier layer,
- providing a defined color for identifying the thickness of the adhesive tape by means of at least one of the following measures a) to c):
   (a) arranging a color layer having the defined color between the carrier layer and the bonding layer and/or between the carrier layer and the pressure-sensitive adhesive layer,
   (b) forming the second layer in the defined color,
   (c) forming the bonding layer in the defined color.

The method described herein serves to manufacture an adhesive tape according to the present invention. To avoid repetition, reference is made to the advantages and preferred embodiments described above with respect to the adhesive tape. These apply correspondingly to the method and the resulting product structure.

It is understood that the steps of the method described herein do not necessarily have to be carried out in the order in which they are listed, unless a specific sequence is technically required. The individual steps may be performed in a different order, in parallel, or in combination with further process steps, provided that the resulting product corresponds to the claimed structure of the adhesive tape.

According to a particularly preferred method, the color layer is applied to the first side of the carrier layer and/or to the second side of the carrier layer, preferably by applying or printing a color layer on one or both sides of the carrier layer using a printing ink in the defined color.

The invention will now be explained in more detail by way of example with reference to the accompanying drawings, in which:
- Figure 1: shows a cross-sectional view of an adhesive tape configured as a make-ready tape according to a first embodiment of the prior art;
- Figure 2: shows a cross-sectional view of an adhesive tape configured as a make-ready tape according to a second embodiment of the prior art;
- Figure 3: shows a cross-sectional view of an adhesive tape configured as a make-ready tape according to a particularly preferred first embodiment of the invention;
- Figure 4: shows a cross-sectional view of an adhesive tape configured as a make-ready tape according to a particularly preferred second embodiment of the invention;
- Figure 5: shows a cross-sectional view of an adhesive tape configured as a make-ready tape according to an alternative embodiment of the invention;
- Figure 6: shows a cross-sectional view of an adhesive tape configured as a make-ready tape according to a further alternative embodiment of the invention.

Figure 3 schematically illustrates a cross-section of a particularly preferred first embodiment of an adhesive tape 1 according to the invention, configured as a make-ready tape. In this embodiment, the adhesive tape 1 comprises, by way of example, a biaxially oriented polypropylene (BOPP) foil as a second layer 2, which in this case forms an outer or cover layer of the adhesive tape 1. The second layer 2, formed as a BOPP foil, is furthermore joined to a carrier layer 4 by means of a bonding layer 3, which is formed by a laminating adhesive. The carrier layer 4 is further formed, by way of example, from a glassine paper, the first side of which carries or is formed by a color layer 5, which is, for example, printed onto the carrier layer 4 and is thereby arranged between the carrier layer 4 and the bonding layer 3. Preferably, the color layer 5 is formed by a printing ink which is printed onto the carrier layer 4 prior to lamination or bonding of the second layer 2.

For clarification, it is noted that in all figures, the colored layers are indicated by hatching.

Typically, the second layer 2 is applied onto the carrier layer 4 - which comprises the color layer 5 - by means of a lamination or coating process. The bonding layer 3, which is formed by a laminating adhesive, functions as a bonding agent, ensuring a strong and durable connection between the second layer 2 and the carrier layer 4 that carries the color layer 5. This process may involve the use of heat, pressure, or UV curing, depending on the specific adhesive employed. The lamination process provides high bonding strength and enables the formation of a stable, multilayer adhesive tape suitable for die-cutting applications.

The carrier layer 4, formed by the glassine paper, is present in its original state of manufacture, i.e., it is not colored, and in particular not dyed. It may, for example, be white.

On the second side of the carrier layer 4, which is opposite the first side and/or the color layer 5, a pressure-sensitive adhesive layer 6 is applied.

The adhesive layer 6 ensures that the adhesive tape 1, which is configured as a make-ready tape, adheres reliably to a substrate, such as a die-cutting tool, thereby allowing, for example, precise tolerance compensation.

Figure 4 shows a further, particularly preferred alternative embodiment according to the invention, which differs from the embodiment shown in Figure 3 solely in that a second color layer 7 is additionally applied to the second side of the carrier layer 4, i.e., the side opposite the first side and/or the color layer 5. This second color layer 7 is thus arranged between the carrier layer 4 and the adhesive layer 6. The second color layer 7 may have the same or a different thickness compared to the first color layer 5. This additional color layer 7 may also be printed onto the carrier layer 4, for example using a printing ink. The application of the color layer 7 may likewise take place prior to the application of the adhesive layer 6.

In typical use, the adhesive tape is provided as rolled goods, and the color coding is primarily intended to be visually recognized from the side of the roll, i.e., from the roll edge. The embodiments shown in Figures 3 and 4 are particularly well suited for this purpose, as the color is printed onto one or both sides of the carrier layer 4.

In both the embodiment according to Figure 3 and that according to Figure 4, it may also be advantageous if the second layer 2 and/or the bonding layer 3, and preferably both, are transparent or at least translucent, in order to ensure good visibility of the color layer 5 from the side of the second layer 2. However, this is not mandatory.

In connection with the embodiment shown in Figure 4, it may additionally be advantageous if the adhesive layer 6 is also configured to be transparent and/or translucent. This can particularly be achieved when the pressure-sensitive adhesive layer 6 is based on an acrylic polymer system.

The two inventive embodiments illustrated in Figures 3 and 4 are preferred embodiments in which only the carrier layer 4 is coated or printed on one or both sides. In these embodiments, preferably none of the second layer 2, the bonding layer 3, the carrier layer 4, or the adhesive layer 6 is dyed or colored throughout.

However, for certain applications it may be advantageous not to coat or print the carrier layer 4 on one or both sides, for example, if the carrier layer 4 is made of or formed by a material that is difficult to coat or print. In such cases, the two alternative embodiments illustrated in Figures 5 and 6 may be applied, in which either the second layer 2 (Figure 5) or the bonding layer 3 (Figure 6) is colored or pigmented. In principle, it would also be possible to color both the second layer 2 and the bonding layer 3, although this is not illustrated here.

In the embodiment shown in Figure 5, only the second layer 2 is colored or pigmented.

In the embodiment shown in Figure 6, only the bonding layer 3 is colored or pigmented.

### List of reference signs

- 1: adhesive tape
- 2: second layer
- 3: bonding layer
- 4: carrier layer
- 6: adhesive layer
- 7: color layer
- 100: make-ready tape (prior art)
- 101: BOPP film
- 102: laminating adhesive (laminating glue)
- 103: carrier layer
- 104: adhesive layer
- 200: make-ready tape (prior art)
- 201: BOPP film
- 202: laminating adhesive (laminating glue)
- 203: carrier layer
- 204: adhesive layer

## Claims

1. Adhesive tape, in particular make-ready tape for compensating tolerances in die-cutting processes and/or die-cutting tools, comprising:
- a first layer forming a strip-shaped, planar carrier layer (4) having a first side and a second side opposite the first side,
- a second layer (2) which is joined to the first side of the carrier layer (4) by means of a bonding layer (3),
- a third layer forming a pressure-sensitive adhesive layer (6) which is joined to the second side of the carrier layer (4),
wherein, for identifying the thickness of the adhesive tape (1) by means of a defined color, at least one of the following measures is provided:
a) a color layer (5, 7) having the defined color is arranged between the carrier layer (4) and the bonding layer (3) and/or between the carrier layer (4) and the pressure-sensitive adhesive layer (6),
b) the second layer (2) has the defined color,
c) the bonding layer (3) has the defined color.

2. Adhesive tape according to any one of the preceding claims, wherein only measure a) is implemented.

3. Adhesive tape according to claim 1 or 2, wherein at least one color layer (5) is arranged between the carrier layer (4) and the bonding layer (3), the presence of an additional color layer (7) between the carrier layer (4) and the pressure-sensitive adhesive layer (6) being optional.

4. Adhesive tape according to any one of the preceding claims, wherein the color layer (5, 7) is applied to the first side of the carrier layer (4) and/or to the second side of the carrier layer (4).

5. Adhesive tape according to claim 4, wherein the color layer (5, 7) is a printed layer applied on one or both sides of the carrier layer (4) using a printing ink in the defined color.

6. Adhesive tape according to any one of preceding claims, wherein the carrier layer (4) is not colored, in particular not dyed, and/or comprises or is a paper-based material.

7. Adhesive tape according to claim 4, wherein the carrier layer is a calendered paper, preferably parchment paper or glassine paper.

8. Adhesive tape according to any one of the preceding claims, wherein the bonding layer (3) is or comprises a laminating adhesive.

9. Adhesive tape according to any one of the preceding claims, wherein the second layer (2) is formed by a film, preferably by a biaxially oriented polypropylene film.

10. Adhesive tape according to any one of the preceding claims, wherein the bonding layer (3) and/or second layer (2) is transparent or translucent.

11. Adhesive tape according to any one of the preceding claims, wherein the bonding layer (3) and/or second layer (2) is at least partly colored, preferably throughout its volume, most preferably by means of a through-dyeing process.

12. Adhesive tape according to any one of the preceding claims, wherein the adhesive layer (6) is not colored, in particular not dyed.

13. Set of adhesive tapes, in particular a make-ready tape set, comprising a plurality of adhesive tapes (1) according to any one of the preceding claims, wherein the adhesive tapes (1) comprise at least two different thicknesses, and each defined color is associated with a specific tape thickness, and different colors indicate different tape thicknesses.

14. A method for manufacturing an adhesive tape, in particular an adhesive tape according to any one of the preceding claims, the method comprising the steps of:
- providing a first layer forming a strip-shaped, planar carrier (4) layer having a first side and a second side opposite the first side,
- applying a second layer (2) to the first side of the carrier layer (4) by means of a bonding layer (3),
- applying a third layer forming a pressure-sensitive adhesive layer (6) to the second side of the carrier layer (4),
- providing a defined color for identifying the thickness of the adhesive tape (1) by means of at least one of the following measures:
(a) arranging a color layer (5, 7) having the defined color between the carrier layer (4) and the bonding layer (3) and/or between the carrier layer (4) and the pressure-sensitive adhesive layer (6),
(b) providing the second layer (2) in the defined color,
(c) providing the bonding layer (3) in the defined color.

15. A method according to claim 14, wherein the color layer (5, 7) is applied to the first side of the carrier layer (4) and/or to the second side of the carrier layer (4), preferably by applying a color layer (5, 7) on one or both sides of the carrier layer (4) using a printing ink in the defined color.
